# EUROPÄISCHE PATENTSCHRIFT

(11) **EP 0 509 307 B1**
(45) Veröffentlichungstag und Bekanntmachung des Hinweises auf die Patenterteilung: **01.03.1995**
(21) Anmeldenummer: 92105507.5
(22) Anmeldetag: 31.03.1992
(51) Int. Cl.: A01D 34/63, A01D 43/10, A01B 59/042

(54) **Über eine Zugdeichsel an einem Schlepper anhängbares Mähwerk**
Mowing device attachable to a tractor by a drawbar
Tondeuse attachable à un tracteur au moyen d'une barre de traction

(30) Priorität: 13.04.1991 DE 4112154
(43) Veröffentlichungstag der Anmeldung: 21.10.1992
(73) Patentinhaber: Friedrich Mörtl Schleppergerätebau GmbH & Co. KG, D-97737 Gemünden (DE)
(72) Erfinder: Grenzebach, Hans, W-8780 Gemünden, Main (DE)
(74) Vertreter: Rehberg, Elmar, Dipl.-Ing.

(56) Entgegenhaltungen:
- GB-A- 703 134
- US-A- 4 991 383
- US-A- 5 060 462

## Beschreibung

Die Erfindung bezieht sich auf ein Mähwerk, insbesondere Tellermähwerk, mit den im Oberbegriff des Anspruches 1 angegebenen Merkmalen. Die Laufräder, auf denen der Mähwerksrahmen abgestützt ist, sind zum Erreichen der Arbeitsstellung bzw. der Transportstellung um etwa vertikale Achsen verschwenkbar und feststellbar. Die Verschwenkbarkeit ist erforderlich, um aus der Arbeitsstellung in die Transportstellung bzw. umgekehrt überzugehen. Die Funktion der Feststellung ist erforderlich bzw. muß auf irgendeine Art und Weise genutzt werden, um die jeweils eingestellte Stellung beizubehalten. In der Arbeitsstellung ist eine möglichst große Arbeitsbreite für einen rationellen Einsatz des Mähwerks sinnvoll und wünschenswert. In der Transportstellung hingegen, also bei Straßenfahrt, sind gesetzliche Grenzen zu beachten. Die Einheit aus Schlepper und gezogenem Mähwerk darf hierbei beispielsweise eine Breite von 3 m nicht überschreiten.

Aus der DE 35 11 099 C2 ist ein Mähwerk bekannt. An dem Mähwerksrahmen sind die Schneidelemente angeordnet. Der Mähwerksrahmen ist über zwei Laufräder am Boden abgestützt. Die Laufräder sind lenkbar ausgebildet, und es sind hier hydraulische, pneumatische oder elektrische Mittel vorgeschlagen, um die Lenkvorgänge zu bewerkstelligen. Mit dem Mähwerksrahmen ist eine Zugdeichsel starr verbunden, die an ihrem anderen Ende eine gelenkartige Verbindung zum Schlepper aufweist. Bei diesem bekannten Mähwerk wird bereits der Vorteil genutzt, daß sich der Mähwerksrahmen und demzufolge auch die Schneidelemente in der Arbeitsstellung quer zur Fahrtrichtung versetzt neben dem Schlepper befinden, so daß die größtmögliche Arbeitsbreite erzielt wird. In der Transportstellung, die durch einen entsprechenden Lenkvorgang an den Laufrädern eingenommen wird, befindet sich das Mähwerk hinter dem Schlepper in Schräganordnung zur Fahrtrichtung, so daß durch dieses relative Verschwenken die Breite des Mähwerks - quer zur Fahrtrichtung - reduziert ist. Die relative Lage des Mähwerks hinter dem Schlepper in der Transportstellung ist von dem Verschwenkwinkel der Laufräder abhängig, der eingesteuert wird. Sinnvoll ist es, einen solchen Verschwenkwinkel zu wählen, bei dem das Mähwerk in seiner Schräganordnung bezüglich der Längsmittelachse des Schleppers nach beiden Seiten gleich weit übersteht. Eine andere Möglichkeit besteht darin, den Verschwenkwinkel der Laufräder so zu wählen, daß eine der beiden Seiten des Mähwerks in der Schräganordnung mit der betreffenden Seite des Schleppers fluchtet, so daß das Mähwerk nur nach einer Seite über die Schlepperbreite übersteht. Einen größeren Verschwenkwinkel der Laufräder zu wählen, ist zwecklos, weil hierdurch ein entsprechender seitlicher Versatz des Mähwerks in der Transportstellung erreicht würde, durch den die Gesamtbreite von Schlepper und Mähwerk nur unzulässig vergrößert würde. Es gibt also einen Grenzwinkel, der bei gegebenen geometrischen Verhältnissen nicht überschritten werden darf. Andererseits ist die Arbeitsbreite eines solchen Mähwerks begrenzt, wenn in der Transportstellung die vorgeschriebene zulässsige Breite nicht überschritten wird. Bei dem bekannten Mähwerk sind die Schneidelemente starr am Mähwerksrahmen angeordnet und die Bodenanpassung wird hier ebenfalls über die Laufräder ermöglicht. Durch die Kombination der Höheneinstelleinrichtung in Verbindung mit den gelenkten Laufrädern entsteht eine komplizierte Baueinheit. Da jedoch die Lenkung der Laufräder durch hydraulische, pneumatische oder elektrische Mittel vom Schleppersitz aus stufenlos einsteuerbar ist und somit mechanische Stellmittel ausgeschlossen sind, kann diese Lenksteuerung auch dazu benutzt werden, um vorteilhaft einer Hangabdrift entgegenzuwirken. Allerdings sind hierzu gezielte Lenkausschläge erforderlich.

Aus der DE-PS 24 47 424 ist ein Mähwerk bekannt, an dessen Rahmen die Laufräder nicht schwenkbar, sondern fest und rechtwinklig zum Rahmen angeordnet sind. Die Zugdeichsel ist gegenüber dem Mähwerksrahmen in Stufen verstellbar und absteckbar. Diese mechanischen Mittel sind zwar besonders einfach in der Ausbildung, erlauben jedoch nicht eine Betätigung vom Schleppersitz aus. Das Mähwerk wird sowohl in der Arbeitsstellung wie auch in der Transportstellung in Quer-Anordnung geführt, so daß die Transportbreite mit der Arbeitsbreite in etwa übereinstimmt. Bei einem Wechsel von der Arbeitsstellung in die Transportstellung ist eine gezielte Rückwärtsfahrt mit dem Schlepper erforderlich oder das Mähwerk muß so leicht gebaut sein, daß es von Hand um die Zugdeichsel verschwenkt werden kann. Für einen Wechsel aus der Transportstellung in die Arbeitsstellung ist es lediglich erforderlich, die Absteckeinrichtung zu lösen, ein Stück vorwärts zu fahren und die Absteckeinrichtung wieder zu fixieren. Vorteile hinsichtlich einer großen Arbeitsbreite ergeben sich aus dieser Bauart nicht, obwohl die Zugdeichsel durch die Absteckeinrichtung in Stufen verschwenkbar am Mähwerksrahmen gelagert ist.

Aus dem Prospekt der Firma Kuhn S. A. mit der Bezeichnung "FC 301 G Mower Conditioner", Ausgabe 11.90, ist ein gezogenes Mähwerk mit Conditioner und Schwadblechen bekannt, bei dem die Arbeitsbreite in einer Arbeitsstellung und die Transportbreite in der Transportstellung übereinstimmen, weil sich dabei das Mähwerk jeweils in Quer-Anordnung zur Fahrtrichtung befindet. Um eine Schwadablage in unterschiedlicher seitlicher Entfernung von der Schlepperspur zu ermöglichen, sind sowohl die Laufräder wie auch die Zugdeichsel relativ zum Mähwerksrahmen verschwenkbar. Verschiedene Schräganordnungen des Mähwerks werden nur in speziellen Arbeitsstellungen erreicht. Um die verschiedenen Arbeitsstellungen einzustellen, wird die Zugdeichsel in einem vergleichsweise großen Verschwenkwinkel und die Laufräder in einem vergleichsweise kleinen Verschwenkwinkel über hydraulische Mittel simultan vom Schlepper aus verschwenkt. Um aus der Arbeitsstellung in Quer-Anordnung in die Transportstellung in Quer-Anordnung des Mähwerks überzugehen, wird ausschließlich die Zugdeichsel verschwenkt. Vorteile hinsichtlich einer geringen Breite in der Transportstellung und einer demgegenüber vergrößerten Arbeitsbreite in einer Arbeitsstellung sind hier nicht möglich.

Aus der US-A-4 991 383 ist ein Mähwerk mit den Merkmalen des Oberbegriffes des Anspruches 1 bekannt. Es ist ein Mähwerksrahmen, der Schneidelemente trägt, mit einer Deichsel ausgestattet und auf Laufrädern gestützt. Die Deichsel ist über einen Hydraulikzylinder um eine vertikale Achse gegenüber dem Rahmen schwenkbar. Unabhängig davon sind auch die Laufräder vermittels Hydraulikzylinder um vertikale Achsen schwenkbar. Zum Erreichen verschiedener Arbeitsstellungen, bei denen der Rahmen des Mähwerks in unterschiedlichen Schräglagen zur Fahrtrichtung aufscheint, wird sowohl die Deichsel wie auch die Laufräder in ihrem Winkel entsprechend verstellt. Die Hauptarbeitsstellung ist eine solche, in der das Mähwerk mit seinem Rahmen im rechten Winkel zur Fahrtrichtung angeordnet geführt wird, also seine maximale Arbeitsbreite aufweist. Auch in der Transportstellung befindet sich das Mähwerk in der gleichen Relativlage, nimmt also auch eine maximale Transportbreite ein. Zum Erreichen dieser Transportstellung aus der Hauptarbeitsstellung heraus wird lediglich die Deichsel verschwenkt, während die Laufräder mit ihren Achsen unverschwenkt bleiben, sich also parallel zum Rahmen des Mähwerks erstrecken.

Der Erfindung liegt die Aufgabe zugrunde, ein Mähwerk der eingangs beschriebenen Art so auszubilden, daß trotz beschränkter Transportbreite eine vergrößerte, möglichst große Arbeitsbreite erzielbar ist.

Erfindungsgemäß wird dies bei dem Mähwerk der eingangs beschriebenen Art dadurch erreicht, daß die Laufräder zum Erreichen der Transportstellung aus der Arbeitsstellung bzw. umgekehrt um einen größeren Winkel verschwenkbar sind, als es einem Grenzwinkel bei starrer Anordnung der Zugdeichsel am Mähwerksrahmen entspricht, und daß der Verschwenkwinkel der Laufräder größer als der Verschwenkwinkel der Zugdeichsel vorgesehen ist. Die Mittel zum Verschwenken der Laufräder und die Mittel zum Feststellen der Laufräder können in den gleichen Mitteln bestehen. Andererseits ist es aber auch möglich, separate Mittel für jede Funktion einzusetzen bzw. Gegebenheiten zu nutzen. Beispielsweise stellt ein Hydraulikzylinder in der ausgefahrenen Stellung seiner Kolbenstange neben seiner ersten Funktion, mit der eine Verschwenkung erreicht wird, zugleich ein Feststellmittel dar, wenn in der betreffenden Stellung die Kräfte in Ausziehrichtung auf die Kolbenstange einwirken. Entsprechendes gilt für die der Verschwenkung und Feststellung der Zugdeichsel zugeordneten Mittel. Pneumatische, hydraulische und/oder elektrische Mittel lassen sich vorteilhaft vom Schleppersitz aus steuern, während die Anordnung von mechanischen Mitteln auf dem Mähwerk in der Regel das Absteigen vom Schleppersitz erfordern.

Wesentlich für die vorliegende Erfindung ist, daß ein größerer Verschwenkwinkel für die Laufräder, als es dem Grenzwinkel bei starrer Anordnung der Zugdeichsel entspricht, Anwendung findet, so daß das Mähwerk in der Transportstellung vergleichsweise noch schräger zur Fahrtrichtung positioniert wird, so daß seine Breite zur Fahrtrichtung noch geringer wird. Dabei wird also ein Verschwenkwinkel für die Laufräder angewendet, der ohne Verschwenkung der Zugdeichsel zu einem seitlichen Versatz des Mähwerks relativ zur Schlepperspur führen würde. Dieser seitliche Versatz wird gleichsam durch die Verschwenkung der Zugdeichsel so kompensiert, daß der durch die größere Schrägstellung erzielbare Vorteil genutzt werden kann. Dabei ist es erstaunlicherweise möglich, ein Rotationsmähwerk mit acht Mähtellern oder acht Mähtrommeln zu schaffen, welches in der Transportstellung eine Breite von weniger als 3 m aufweist und in der Arbeitsstellung eine Arbeitsbreite von 3,3 m erbringt. Hierbei muß man berücksichtigen, daß die notwendige Schutzverkleidung für das Mähwerk über die effektive Arbeitsbreite noch übersteht und nicht abgenommen werden muß.

Der Verschwenkwinkel an den Laufrädern muß größer gewählt werden als der Verschwenkwinkel an der Zugdeichsel. Die Verschwenkrichtungen, die eingehalten werden müssen, um aus der einen Stellung in die andere zu gelangen bzw. umgekehrt, stimmen miteinander überein, so daß eine gleichsinnige Verschwenkung der Zugdeichsel und der Laufräder erforderlich ist. Diese beiden Verschwenkungen können zeitgleich oder auch zeitlich nacheinander durchgeführt werden. Dies ist eine Frage der Betätigung bzw. der Steuerung. Im Zusammenhang damit muß es gesehen werden, daß gemeinsame Verstellmittel oder separat zugeordnete Verstellmittel vorgesehen sein können. Sofern keine mechanischen Mittel angewendet werden, können diese vorteilhaft vom Schleppersitz aus bedient bzw. eingesteuert werden.

Für die Verschwenkung der Laufräder und der Zugdeichsel kann ein gemeinsames Mittel vorgesehen sein. Dadurch vereinfacht sich der bauliche Aufwand und es ist zugleich sichergestellt, daß die beiden Verschwenkungen in Abhängigkeit voneinander gemeinsam durchgeführt werden. Andererseits ist es jedoch auch möglich, für die Verschwenkung der Laufräder und der Zugdeichsel getrennte Mittel vorzusehen, deren gemeinsame zeitgleiche oder zeitversetzte Betätigung dann durch die Art der Steuerung festzulegen ist. Da die Verschwenkwinkel unterschiedlich sind, hat auch die Anordnung getrennter Mittel ihre Vorteile. Außerdem ist auch eine Arbeitsstellung mit Schräganordnung möglich, z. B. beim Ablegen eines Doppelschwads oder beim Ausweichen von Hindernissen.

Der Verschwenkwinkel der Laufräder sollte etwa das drei- bis vierfache des Verschwenkwinkels der Zugdeichsel betragen. Natürlich sind diese Winkel im Einzelnen von verschiedenen geometrischen Verhältnissen abhängig, so von der Länge der Zugdeichsel und der Arbeitsbreite. Für eine gängige Größenordnung eines Mähwerks mit einer Arbeitsbreite von 3,3 m hat sich ein Verschwenkwinkel der Zugdeichsel von 15° und der Laufräder von 54° als besonders sinnvoll erwiesen. Neben den Mitteln für die Verschwenkung sollten bzw. können auch Mittel für die Feststellung vorgesehen sein. Gesonderte Feststellmittel können beispielsweise bei mechanischer Ausbildung in der Anordnung einer Lochreihe in Verbindung mit einem Absteckbolzen vorgesehen sein. Nicht immer ist es erforderlich, die Feststellmittel zusätzlich vorzusehen; oft erfüllen auch die Verschwenkmittel gleichzeitig oder mit geringer Modifikation auch eine Feststellfunktion.

Wenn gemeinsame Mittel für das Verschwenken der Laufräder einerseits und der Zugdeichsel andererseits vorgesehen sind, ist es sinnvoll, getriebliche Verbindungsmittel für die gleichzeitige, abgestimmte Verschwenkung der Laufräder und der Zugdeichsel vorzusehen, um auf diese Art und Weise die erforderliche Übersetzung für das Verhältnis der beiden Verschwenkwinkel zueinander zu erzielen.

In einer bevorzugten Ausführungsform ist mit der Zugdeichsel ein Hebel starr verbunden, der ein Gelenk aufweist, das über einen Lenker mit der Anschlagplatte gelenkig verbunden ist, wobei der Abstand zwischen dem Gelenk und dem Schwenklager so groß ist, daß die Räder mindestens die 2,5fache Schwenkbewegung der Zugdeichsel ausführen. Der Lenker und die Spurstange sind damit auf unterschiedlichen Seiten der Anschlagplatte angeordnet.

In einer weiteren bevorzugten Ausführungsform der Erfindung ist die Zugdeichsel über ein am Mähwerksrahmen vorgesehenes Schwenklager hinaus verlängert und das freie Ende der Zugdeichsel ist über einen Hebel gelenkig mit dem einen Laufrad verbunden; die beiden Laufräder können dann über eine Spurstange gekoppelt sein. Diese Ausführung ist besonders einfach und kostengünstig. Durch die Wahl der Länge des Hebels und der Länge des freien Überstands der Zugdeichsel über das Schwenklager hinaus sowie durch die Wahl des Hebelarms an einer Radgabel kann die notwendige Übersetzung sichergestellt bzw. eingerichtet werden. Andererseits ist es natürlich möglich, das freie Ende der Zugdeichsel über je einen Hebel gelenkig mit je einem Laufrad zu verbinden und insoweit die beiden Laufräder zu verschwenken.

In Verbindung mit diesen Ausführungsformen kann das gemeinsame Mittel zwischen Zugdeichsel und Mähwerksrahmen angeordnet sein und einen doppelt wirkenden Hydraulikzylinder aufweisen, der vom Schleppersitz aus über ein Steuerventil steuerbar ist. Damit ist der Hydraulikzylinder an einer Stelle untergebracht, an der er weder die Anordnung der Schneidelemente noch die evtl. zusätzliche Anordnung einer Konditioniereinrichtung stört. Andererseits sind an dieser Stelle die Hebelarme für den Kraftangriff leicht verwirklichbar und überschaubar.

Beim Verschwenken der beiden Laufräder in die Transportstellung kann zweckmäßig eines der beiden Laufräder zwangsgelenkt sein, während das andere Laufrad in einem begrenzten Winkelbereich als Nachlaufrad ausgebildet ist. Unter einem Nachlaufrad wird eine solche Radanordnung verstanden, bei der die etwa vertikale Schwenkachse, um welche bei Lenkvorgängen die das Rad tragende Radgabel verschwenkt wird, in Fahrtrichtung gesehen vor dem Aufstandspunkt des Rads die Aufstandsebene durchdringt. Wenn das in Transportstellung vordere Laufrad als Führungsrad und das hintere Führungsrad als Nachlaufrad ausgebildet ist, ergibt sich vorteilhaft die Möglichkeit, mit der Einheit aus Schlepper und Mähwerk auch besonders enge Kurven befahren zu können.

Die Erfindung wird anhand bevorzugter Ausführungsformen weiter erläutert und beschrieben. Es zeigen:
- Figur 1: eine grundrißartige Darstellung eines Mähwerks in einer ersten Ausführungsform in Arbeitsstellung und in Transportstellung,
- Figur 2: eine ähnliche Darstellung wie Figur 1 bei einer zweiten Ausführungsform des Mähwerks,
- Figur 3: eine Draufsicht auf das Mähwerk zur Verdeutlichung der verschiedenen Schwenkwinkel und
- Figur 4: eine weitere Draufsicht auf ein Mähwerk mit weiteren Einzelheiten.

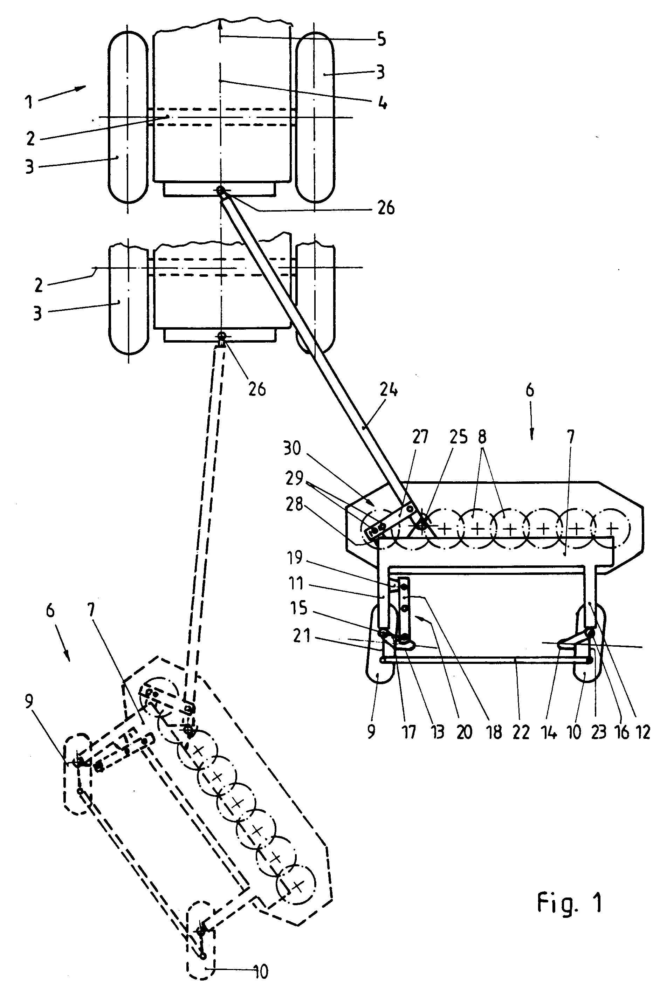

In Figur 1 ist stark schematisiert ein Schlepper 1 mit seiner Hinterachse 2 und den Hinterrädern 3 angedeutet. Der Schlepper weist eine Längsmittelachse 4 auf. Die Fahrtrichtung ist durch einen Pfeil 5 gekennzeichnet.

Ein Mähwerk 6 befindet sich in Arbeitsstellung (durchgezogene Linienführung) rechts neben dem Schlepper 1 versetzt, in Fahrtrichtung gemäß Pfeil 5 gesehen. Das Mähwerk 6 weist einen Mähwerksrahmen 7 auf, dessen wesentlicher Bestandteil ein quer durchgehender Träger ist, der somit in Arbeitsstellung quer, also rechtwinklig zur Fahrtrichtung gemäß Pfeil 5 ausgerichtet, von dem Schlepper gezogen wird. An dem Mähwerksrahmen 7 sind Schneidelemente 8, z. B. als Mähteller oder als Mähtrommeln, vorgesehen. Oft sind diese Schneidelemente 8 an einem gesonderten Mähholm oder Mähbalken angeordnet, der seinerseits wiederum von dem Mähwerksrahmen 7 getragen wird. Der Mähwerksrahmen 7 ist über Laufräder 9 und 10 auf dem Boden abgestützt. Hierzu besitzt der Mähwerksrahmen 7 Ausleger 11 und 12, die an ihrem hinteren Ende in Lagerschalen enden, von denen Radgabeln 13 und 14 aufgenommen werden, wobei die Radgabeln 13 und 14 um etwa vertikale Achsen 15 bzw. 16 schwenkbar sind. Für die Lenkung des linken Laufrads 9 ist an der Radgabel 13 ein Lenker 17 vorgesehen bzw. mit der Radgabel drehfest verbunden, an dessen freiem Ende eine Lochleiste 18 gelenkig angreift, die in verschiedenen Stellungen an einem Auflager 19 am Ausleger 11 absteckbar ist. Wenn nur eine Arbeitsstellung neben einer Transportstellung gewünscht ist, genügt es, wenn in der Lochleiste 18 zwei Abstecklöcher vorhanden sind. Das eine Absteckloch ist so angeordnet, daß die Laufräder 9, 10 sich mit ihrer Radebene etwa rechtwinklig zum Mähwerksrahmen 7 bzw. zur Arbeitsrichtung gemäß Pfeil 5 erstrecken. Allenfalls kann ein kleiner Abweichwinkel zur Korrektur einer Driftbewegung eingestellt sein. Damit ist ein mechanisches Mittel 20 mit den wesentlichen Bestandteilen des Lenkers 17, der Lochleiste 18 und dem Auflager 19 aufgezeigt, welches die Funktion einer Feststellung des Winkels der Achse des Laufrads 9 zur Fahrtrichtung gemäß Pfeil 5 bzw. zum Mähwerksrahmen 7 erbringt. Nach dem Lösen der Absteckung kann die Verschwenkung des Laufrads 9 von Hand erfolgen. Es versteht sich, daß die Mittel 20 nicht nur mechanisch, sondern beispielsweise auch pneumatisch, hydraulisch oder elektrisch verwirklicht werden können. Es ist auch möglich, gemeinsame Mittel vorzusehen, die zugleich die Verschwenkung bewirken wie auch eine Feststellfunktion erfüllen. Es ist auch möglich, hier jeweils separate Mittel 20 vorzusehen.

Mit dem Lenker 17 ist ein weiterer Lenker 21 drehfest verbunden, an welchem eine Spurstange 22 angreift, die zu einem entsprechenden Lenker 23 an dem Laufrad 10 bzw. dessen Radgabel 14 führt. Es versteht sich, daß damit jegliche Verschwenkbewegung des Laufrads 9 auch auf das Laufrad 10 übertragen wird bzw. umgekehrt.

Das Mähwerk 6 weist eine Zugdeichsel 24 auf, die in einem Schwenklager 25 am Mähwerksrahmen 7 schwenkbar gelagert ist und auch an ihrem anderen Ende ein Schwenklager 26 trägt, mit welchem sie gelenkig am Schlepper 1 befestigt ist. Mit dieser Zugdeichsel 24 ist eine Lochleiste 27 gelenkig verbunden, deren anderes Ende in zwei verschiedenen Stellungen in einem Auflager 28 am Maschinenrahmen 7 in zwei verschiedenen Stellungen absteckbar ist, wobei die eine Stellung der Arbeitsstellung und die andere Stellung der Transportstellung zugeordnet ist. Die Lochleiste 27 weist die beiden wahlweise zu benutzenden Löcher 29 auf. Während für die Verschwenkung und Feststellung der Laufräder 9, 10 die Mittel 20 vorgesehen sind, sind Mittel 30 für die Verschwenkung und Feststellung der Zugdeichsel 24 in einem Schwenkwinkel relativ zum Mähwerksrahmen 7 vorgesehen. Diese Mittel 30 bestehen hier aus mechanischen Elementen, nämlich der Lochleiste 27 mit den beiden Löchern 29 und dem Auflager 28 am Mähwerksrahmen 7. Es versteht sich auch hier, daß die Mittel 30 mechanisch, hydraulisch, pneumatisch oder elektrisch ausgebildet sein können. Es können auch gesonderte Mittel für die Verschwenkung einerseits und für die Feststellung andererseits vorgesehen sein. Oft werden jedoch beide Funktionen von ein und demselben Mittel erfüllt.

Während die Arbeitsstellung mit einer erwünschten, möglichst großen Arbeitsbreite in durchgezogener Linienführung dargestellt ist, wird die Transportstellung in gestrichelter Linienführung verdeutlicht. Die Transportstellung ist die Stellung, in welcher die Einheit aus Schlepper 1 und Mähwerk 6 z. B. eine öffentlich zugängliche Straße befährt, wobei hier die Breite aus Schlepper 1 und Mähwerk 6 quer zur Fahrtrichtung gemäß Pfeil 5 3 m insgesamt nicht überschreiten darf. In dieser Transportstellung ist der Mähwerksrahmen 7 schräggestellt, d. h. er befindet sich in Schräganordnung zu der Fahrtrichtung gemäß Pfeil 5. Diese Schräganordnung in der Transportstellung wird durch eine zweifache Verstellung erreicht. Ausgehend von der Arbeitsstellung wird die Feststellung des Mittels 20 gelöst und die Laufräder 9, 10 so verschwenkt und wieder festgestellt, wie es die Transportstellung zeigt. Dabei wird ein relativ großer Verschwenkwinkel an den Laufrädern 9 und 10 überbrückt, wie es aus der Zeichnung ersichtlich ist. Auch die Mittel 30 werden gelöst und die Einheit aus Schlepper 1 und Mähwerk 6 vorwärtsbewegt, bis die Teile die Relativlage gemäß der Transportstellung zueinander einnehmen. Zur Sicherung dieser Transportstellung kann das Mittel 30 wieder eingesteckt werden, wobei nunmehr das andere Loch 29 benutzt wird. Damit ist dann auch die Transportstellung wieder gesichert. Je nach den geometrischen Verhältnissen im Einzelnen kann auch auf eine Sicherung ggf. verzichtet werden, wenn die Krafteinwirkungsrichtungen so sind, daß sich in der Transportstellung das Mähwerk 6 in seiner Schräganordnung so einstellt, daß es auf keiner der beiden Seiten die Spurweite des Schleppers, gemessen an der Außenkante der Räder oder der Radabdeckungen, unterschreitet. Entweder wird eine Anordnung gewählt, bei der das Mähwerk 6 in der Schräganordnung in der Transportstellung nach beiden Seiten zu der Längsmittelachse 4 des Schleppers 1 jeweils gleich weit übersteht oder es wird eine fluchtende Anordnung z. B. der rechten Seite der Einheit aus Schlepper 1 und Mähwerk 6 gewählt, wie es für einen Straßenverkehr, bei dem auf der rechten Seite rechts gefahren wird, sinnvoll ist. Das Mähwerk 6 steht dann über die Schlepperbreite nur auf der linken Seite über und der Fahrer braucht bei der Straßenfahrt nur die linke Seite des Mähwerks 6 zu beachten.

Um aus der Transportstellung wieder in eine Arbeitsstellung zu gelangen, müssen umgekehrt wiederum die Laufräder 9 und 10 einerseits und die Zugdeichsel 24 andererseits relativ zum Mähwerksrahmen 7 verschwenkt werden. Hierbei wird vom Schlepperfahrer oft eine gezielte Rückwärtsfahrt eingesetzt, um die Relativlage zum Abstecken insbesondere des Mittels 30 zu erreichen. Wenn die Mittel 20 und 30 z. B. hydraulisch ausgebildet sind, kann die Verschwenkung und Feststellung in einfacher Weise vom Schleppersitz aus gesteuert werden, wie dies an sich auch für andere Arbeitsgeräte bekannt ist.

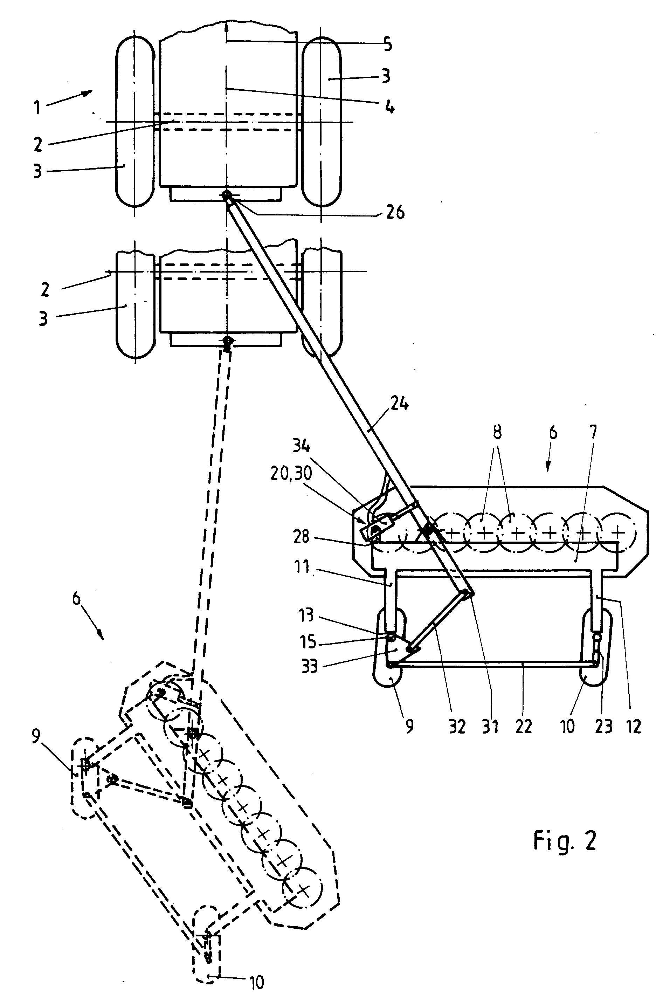

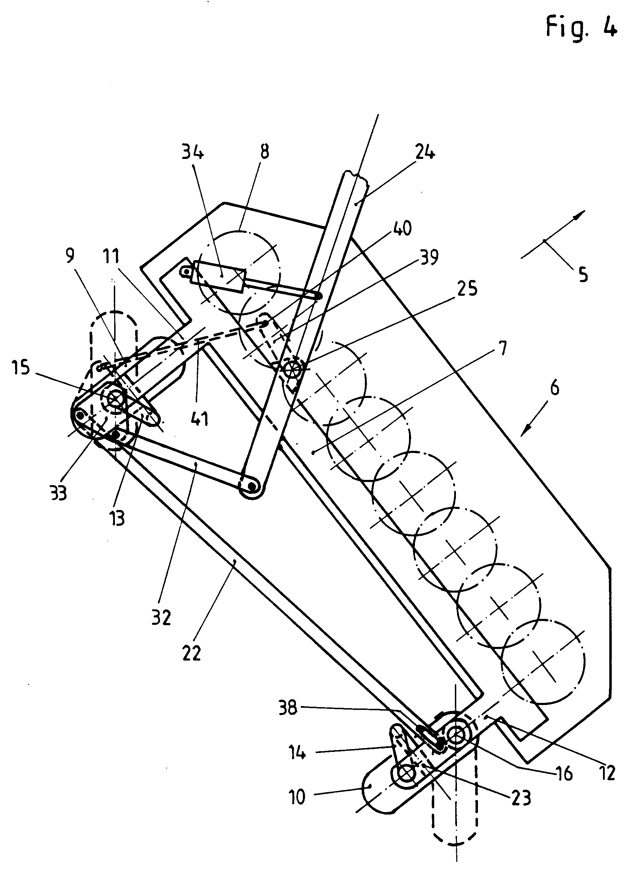

Figur 2 zeigt eine abgewandelte Ausführungsform des Mähwerks 6, wobei jedoch hier ebenfalls die Arbeitsstellung in durchgezogener Linienführung und die Transportstellung in gestrichelter Linienführung verdeutlicht sind. Die Zugdeichsel 24 ist über ihr Schwenklager 25 an dem Mähwerksrahmen 7 hinaus nach hinten verlängert und ihr hinteres Ende 31 ist gelenkig mit einem Lenker 32 verbunden, der andererseits gelenkig an einer Anschlaglatte 33 angreift, die drehfest mit der Radgabel 13 des Hinterrads 9 verbunden ist. Die Anschlagplatte 33 faßt praktisch die beiden Lenker 17 und 21 des Ausführungsbeispiels gemäß Figur 1 zusammen. Demzufolge greift auch die Spurstange 22 an dieser Anschlagplatte 33 gelenkig an und führt zum Lenker 23, der drehfest mit der Radgabel 14 des Laufrads 10 verbunden ist. Figur 4 zeigt zusätzlich in gestrichelter Darstellung eine Ausführungsvariante zu dem Lenker 32. Mit der Zugdeichsel 24 ist ein Hebel 39 drehfest verbunden, der in einem Gelenk 40 endet, an dem gelenkig ein Lenker 41 angreift, der am anderen Ende gelenkig mit der Anschlagplatte 33 in Verbindung steht. Die Funktion der Hebel 32 bzw. 41 ist gleich.

Neben den aufgezeigten mechanischen Mitteln werden die Mittel 20, 30 zum Verschwenken sowohl der Laufräder 9, 10 wie auch der Zugdeichsel 24 von einem doppelt wirkenden Hydraulikzylinder 34 gebildet, der gelenkig zwischen die Zugdeichsel 24 und das Auflager 28 am Mähwerksrahmen 7 eingeschaltet ist. Man erkennt, daß durch eine hydraulische Beaufschlagung des Hydraulikzylinders 34 und über die aufgezeigte getriebliche Verbindung bis zu den Laufrädern 9, 10 sowohl die Zugdeichsel 24 wie auch die Laufräder 9, 10 gemeinsam relativ zu dem Mähwerksrahmen 7 verschwenkt werden. Durch die Wahl der geometrischen Bedingungen, also die Anordnung der Gelenke, der Hebelarme usw., ist sichergestellt, daß einem bestimmten, relativ kleinen Verschwenkwinkel der Zugdeichsel 24 ein bestimmter, relativ großer Verschwenkwinkel der Laufräder 9, 10 zugeordnet ist, wobei gleichsam durch die aufgezeigten mechanischen Verbindungsmittel die entsprechende Übersetzung zwischen den beiden Verschwenkwinkeln erreicht wird. Der die Mittel 20, 30 repräsentierende Hydraulikzylinder 34 kann in üblicher Weise durch ein auf dem Schlepper 1 angeordnetes Steuerventil gesteuert werden, wobei je nach Beaufschlagungsrichtung entweder die Arbeitsstellung oder die Transportstellung eingenommen wird. Durch Absperren der Hydraulikleitungen über das Steuerventil kann die Feststellfunktion erzielt werden. Die Feststellfunktion kann aber auch durch andere, zusätzliche Mittel erreicht werden. Die Anordnung eines einzigen Hydraulikzylinders 34 in Verbindung mit der aufgezeigten getrieblichen Anlenkung, die bis zu den Laufrädern 9 und 10 führt, stellt eine sehr einfache Realisierungsmöglichkeit für die zweifache Verschwenkung dar. Sie sorgt gleichzeitig dafür, daß beide Verschwenkungen zeitlich aufeinander abgestimmt durchgeführt werden können, so daß das Mähwerk 6 sehr einfach aus der Arbeitsstellung in die Transportstellung bzw. umgekehrt überführt werden kann. Die Steuerung kann vom Schleppersitz aus erfolgen, ist also sehr bedienungfreundlich.

Wichtig ist es, zu erkennen, daß die Verschwenkrichtung zum Verschwenken der Zugdeichsel 24 einerseits und der Laufräder 9 und 10 andererseits in der gleichen Richtung erfolgt, also gleichsinnig durchgeführt wird, wobei sich jedoch die überstrichenen Verschwenkwinkel sehr deutlich voneinander unterscheiden. Der Verschwenkwinkel, um den die Laufräder 9, 10 verschwenkt werden, ist größer als der Grenzwinkel, der bei Anordnung einer starren Zugdeichsel am Mähwerksrahmen 7 genutzt werden könnte. Da durch einen solchen Verschwenkwinkel, der größer als der Grenzwinkel bei starrer Anordnung der Zugdeichsel 24 ist, an sich ein seitlicher Versatz des Mähwerks 6 in der Transportstellung nach links eintreten würde, so daß die zulässige Transportbreite auf der Straße überschritten wird, wird gleichsam durch die Verschwenkung der Zugdeichsel 24 dafür gesorgt, daß die Breite des Mähwerks 6 in der Transportstellung zumindest die gesamte Schlepperbreite überdeckt bzw. überlappt. Damit kann eine noch schrägere Schrägstellung des Mähwerks 6 in der Transportstellung genutzt werden, wodurch sich umgekehrt unter Ausnutzung der zulässigen Maximalbreite von 3 m auf der Straße eine größere Arbeitsbreite in der Arbeitsstellung ergibt.

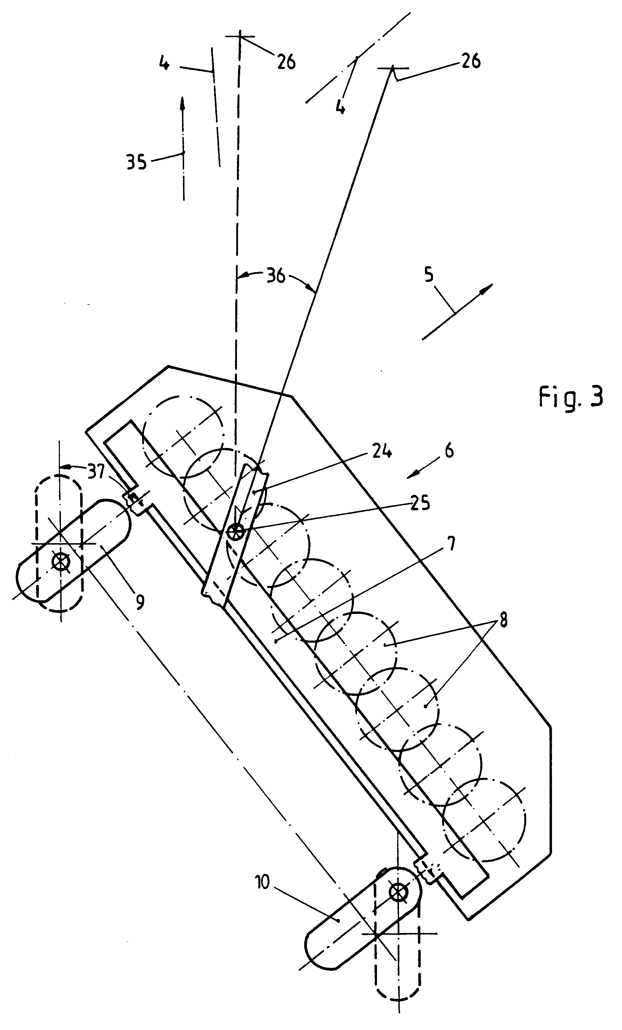

Die verschiedenen Verschwenkwinkel sind nochmals anhand von Figur 3 verdeutlicht. Dort ist zunächst gemäß Pfeil 5 die Fahrtrichtung des Mähwerks 6 mit seinem Mähwerksrahmen 7 in Arbeitsstellung angegeben, wobei die Laufräder 9 und 10 in durchgezogener Darstellung etwa rechtwinklig zum Maschinenrahmen 7 mit ihrer Radebene ausgerichtet sind. Mit anderen Worten sind die Radachsen der Laufräder 9 und 10 parallel zum Maschinenrahmen 7 angeordnet. Die Zugdeichsel 24, die hier nur teilweise dargestellt ist, ist am Maschinenrahmen 7 angelenkt und in dieser Stellung festgestellt. Das Schwenklager 26 befindet sich beispielsweise in der dargestellten Relativlage zu der Längsmittelachse 4 des Schleppers 1.

In gestrichelter Linienführung sind die Verhältnisse in der Transportstellung verdeutlicht. Die Fahrtrichtung ist hier gemäß Pfeil 35 angedeutet und das Schwenklager 26 befindet sich nunmehr relativ zur Längsmittelachse 4 (alles gestrichelte Darstellungen) des Schleppers 1. Die Zugdeichsel 24 ist damit relativ zum Maschinenrahmen 7 um den Verschwenkwinkel 36 verschwenkt, der hier beispielsweise 15° betragen kann.

Auch die Laufräder 9 und 10 sind in der Transportstellung gegenüber der Arbeitsstellung verschwenkt, und zwar um einen Verschwenkwinkel 37, der erheblich größer ausgebildet ist als der Verschwenkwinkel 36. Der Verschwenkwinkel 37 kann relativ zum Verschwenkwinkel 36 z. B. 54° betragen. Man erkennt, daß damit eine beachtliche Schräglage des Mähwerkrahmens 7 relativ zur Fahrtrichtung gemäß Pfeil 35 erreicht wird, so daS es möglich wird, den Mähwerksrahmen 7 relativ lang zu bauen und beispielsweise auch acht Schneidelemente 8 unterzubringen.

Weitere Einzelheiten werden anhand von Figur 4 verdeutlicht und beschrieben. Das linke Laufrad 9 ist über die Zugdeichsel 24, den Lenker 32 und die Anschlagplatte 33 zwangsgelenkt. Es ist als Führungsrad ausgebildet und übernimmt während der Kurvenfahrt der Einheit aus Schlepper 1 und Mähwerk 6 Seitenführungskräfte. Man erkennt, daß die vertikale Achse 15, um die das Laufrad 9 um den Verschwenkwinkel 37 verschwenkbar ist, die Aufstandsebene des Rads 9 hinter dem Aufstandspunkt des Laufrads 9 durchdringt. Diese Besonderheit ist im vorliegenden Zusammenhang ohne Bedeutung. Es könnte auch umgekehrt sein.

Das Laufrad 10 ist als echtes Nachlaufrad ausgebildet, d. h. die vertikale Achse 16 durchstößt die Bodenebene vor dem Aufstandspunkt des Laufrads 10. Das Laufrad 10 bewegt sich damit bei Kurvenfahrt als Nachlaufrad in eine stabile Lage hinein. Um in der Transportstellung eine Kurvenfahrt zu ermöglichen, wobei die Seitenführungskräfte allein von dem linken, näher am Schlepper 1 angeordneten Laufrad 9 übernommen werden, befindet sich in der Spurstange 22 ein Langloch 38, und zwar hier im Bereich der Anlenkung der Spurstange 22 an dem Lenker 23 des Laufrads 10. Das Langloch könnte auch am linken Ende der Spurstange 22 angeordnet sein. Die Funktion ist die gleiche. Das Langloch 38 ist so relativ zu einem es durchsetzenden Bolzen an dem Lenker 23 plaziert, daß in der Arbeitsstellung das Rad 10 so gegen einen Anschlag am einen Ende des Langlochs geschwenkt wird, daß es parallel zum Rad 9 steht und so festgehalten wird. Seitenführungskräfte können somit von den Rädern 9 und 10 gleichermaßen erbracht werden. In der Transportstellung erbringt das Laufrad 10 keine Seitenführungskräfte, so daß es vorteilhaft möglich wird, mit der Einheit aus Schlepper 1 und Mähwerk 6 auch besonders enge Kurven durchfahren zu können, ohne daß die Laufräder 9 und 10 eine radierende Wirkung erbringen.

### Bezugszeichenliste:

- 1 =: Schlepper
- 2 =: Hinterachse
- 3 =: Hinterrad
- 4 =: Längsmittelachse
- 5 =: Pfeil
- 6 =: Mähwerk
- 7 =: Mähwerksrahmen
- 8 =: Schneidelement
- 9 =: Laufrad
- 10 =: Laufrad
- 11 =: Ausleger
- 12 =: Ausleger
- 13 =: Radgabel
- 14 =: Radgabel
- 15 =: vertikale Achse
- 16 =: vertikale Achse
- 17 =: Lenker
- 18 =: Lochleiste
- 19 =: Auflager
- 20 =: Mittel
- 21 =: Lenker
- 22 =: Spurstange
- 23 =: Lenker
- 24 =: Zugdeichsel
- 25 =: Schwenklager
- 26 =: Schwenklager
- 27 =: Lochleiste
- 28 =: Auflager
- 29 =: Löcher
- 30 =: Mittel
- 31 =: Ende
- 32 =: Lenker
- 33 =: Anschlagplatte
- 34 =: Hydraulikzylinder
- 35 =: Pfeil
- 36 =: Verschwenkwinkel
- 37 =: Verschwenkwinkel
- 38 =: Langloch
- 39 =: Hebel
- 40 =: Gelenk
- 41 =: Lenker

## Patentansprüche

1. Mähwerk, insbesondere Tellermähwerk, mit einer zum Anhängen an einem Schlepper vorgeseheren Zugdeichsel und mit einem Mähwerksrahmen, der Schneidelemente trägt und auf zwei Laufrädern abgestützt ist, wobei die Zugdeichsel (24) zum Erreichen der Arbeitsstellung bzw. der Transportstellung des Mähwerks (6) gegenüber dem Mähwerksrahmen (7) über mechanische, hydraulische, pneumatische und/oder elektrische Mittel (30) um eine etwa vertikale Achse verschwenk- und feststellbar ist und die Laufräder zum Erreichen der Arbeitsstellung bzw. der Transportstellung gegenüber dem Mähwerksrahmen über mechanische, hydraulische, pneumatische und/oder elektrische Mittel um etwa vertikale Achsen verschwenkbar und feststellbar sind, dadurch gekennzeichnet, daß die Laufräder (9, 10) zum Erreichen der Transportstellung aus der Arbeitsstellung bzw. umgekehrt um einen größeren Winkel (37) verschwenkbar sind, als es einem Grenzwinkel bei starrer Anordnung der Zugdeichsel am Mähwerksrahmen entspricht, und daß der Verschwenkwinkel (37) der Laufräder (9, 10) größer als der Verschwenkwinkel (36) der Zugdeichsel (24) vorgesehen ist.

2. Mähwerk nach Anspruch 1, dadurch gekennzeichnet, daS für die Verschwenkung der Laufräder (9, 10) und der Zugdeichsel (24) ein gemeinsames Mittel (20, 30) vorgesehen ist.

3. Mähwerk nach Anspruch 1, dadurch gekennzeichnet, daS für die Verschwenkung der Laufräder (9, 10) und der Zugdeichsel (24) getrennte Mittel (20 und 30) vorgesehen sind.

4. Mähwerk nach einem der Ansprüche 1 bis 3, dadurch gekennzeichnet, daß der Verschwenkwinkel (37) der Laufräder (9, 10) etwa das drei- bis vierfache des Verschwenkwinkels (36) der Zugdeichsel (24) beträgt.

5. Mähwerk nach Anspruch 2 oder 4, dadurch gekennzeichnet, daß getriebliche Verbindungsmittel (31, 32, 33) für die gleichzeitige, abgestimmte Verschwenkung der Laufräder (9, 10) und der Zugdeichsel (24) vorgesehen sind.

6. Mähwerk nach Anspruch 5, dadurch gekennzeichnet, daß mit der Zugdeichsel (24) ein Hebel (39) starr verbunden ist, der ein Gelenk (40) aufweist, das über einen Lenker (41) mit der Anschlagplatte (33) gelenkig verbunden ist, und daß der Abstand zwischen dem Gelenk (40) und dem Schwenklager (25) so groß ist, daß die Räder (9, 10) mindestens die 2,5fache Schwenkbewegung der Zugdeichsel (24) ausführen.

7. Mähwerk nach Anspruch 5, dadurch gekennzeichnet, daß die Zugdeichsel (24) über ein am Mähwerksrahmen (7) vorgesehenes Schwenklager (25) hinaus verlängert ist und das freie Ende (31) der Zugdeichsel (24) über einen Hebel (32) gelenkig mit dem einen Laufrad (9) verbunden ist, und daß die beiden Laufräder (9, 10) über eine Spurstange (22) gekoppelt sind.

8. Mähwerk nach Anspruch 5, dadurch gekennzeichnet, daß die Zugdeichsel (24) über ein am Mähwerksrahmen (7) vorgesehenes Schwenklager (25) hinaus nach hinten verlängert ist und das freie Ende (31) der Zugdeichsel (24) über je einen Hebel (32) mit den beiden Laufrädern (9, 10) verbunden ist.

9. Mähwerk nach Anspruch 6, 7 oder 8, dadurch gekennzeichnet, daß das gemeinsame Mittel (20, 30) zwischen Zugdeichsel (24) und Mähwerksrahmen (7) angeordnet ist und einen doppelt wirkenden Hydraulikzylinder (34) aufweist, der vom Schleppersitz aus steuerbar ist.

10. Mähwerk nach Anspruch 1 oder 4, dadurch gekennzeichnet, daß beim Verschwenken der beiden Laufräder (9, 10) eines der beiden Laufräder (9) zwangsgelenkt ist und das andere Laufrad (10) in einem begrenzten Winkelbereich als Nachlaufrad ausgebildet ist.

11. Mähwerk nach Anspruch 10, dadurch gekennzeichnet, daß das in Transportstellung vordere Laufrad (9) als Führungsrad und das hintere Laufrad (10) als Nachlaufrad ausgebildet ist.

## Claims

1. A mower, especially a disk mower, including a draw bar for connection to a tractor and a mower frame, the mower frame carrying a plurality of cutting elements, the mower frame being supported by two running wheels, in which the draw bar (24) is arranged with respect to the mower frame (7) in such a way that the mower frame may be pivoted about a generally upright axis and locked in position with respect to the tractor and having mechanical, hydraulic, pneumatic and/or electric means (30) for pivoting the mower into a working position or a transport position and in which the running wheels are positioned with respect to the mower frame in such a way so that the running wheels may be pivoted about a generally upright axis and locked in position with respect to the mower frame with the aid of the mechanical, hydraulic, pneumatic and/or electric means for pivoting the mower into the working position or the transport position, **characterized in that** the running wheels (9, 10) are pivotable through a larger angle (37) with respect to a corresponding limiting angle through which the draw bar moves with respect to the mower frame when moving the mower to the transport position from the working position or vice versa, so that the pivot angle (37) of the running wheels (9, 10) is larger than the pivot angle (36) of the draw bar (24).

2. The mower of claim 1, **characterized in that** common means (20, 30) are provided for the pivoting of the running wheels (9, 10) and the draw bar (24).

3. The mower of claim 1, **characterized in that** separate means (20, 30) are provided for the pivoting of the running wheels (9, 10) and the draw bar (24).

4. The mower of one of the claims 1 to 3, **characterized in that** the pivot angle (37) of the running wheels (9, 10) is approximately three to four times larger than the pivot angle (36) of the draw bar (24).

5. The mower of claim 2 or 4, **characterized in that** transmitting connecting means (31, 32, 33) are provided for the simultaneous, coordinated pivoting of the running wheels (9, 10) and the draw bar (24).

6. The mower of claim 5, **characterized in that** a lever (39) having a joint (40) that is movably connected to a stop plate (33) by a connecting rod (41) is fixed to the draw bar (24), and in that the joint (40) and a pivot bearing (25) are spaced apart so that the wheels (9, 10) move trough at least two-and-a-half times the pivoting movement of the draw bar (24).

7. The mower of claim 5, **characterized in that** the draw bar (24) is elongated surpassing a pivot bearing (25) supported on the mower frame (7), and the free end (31) of the draw bar (24) is movably connected to running wheel (9) by a connecting rod (32), and in that the wheels (9, 10) are coupled to each other by a connecting tie rod (22).

8. The mower of claim 5, **characterized in that** the draw bar (24) is elongated and extends in a rearward direction beyond a pivot bearing (25) supported on the mower frame (7), and the free end (31) of the draw bar (24) is movably connected to each running wheel (9, 10) by a connecting rod (32).

9. The mower of claim 6, 7 or 8, **characterized in that** the common means (20, 30) are positioned between the draw bar (24) and the mower frame (7), the common means having a double acting hydraulic cylinder (34) which may be controlled from the seat of the tractor.

10. The mower of claim 1 or 4, **characterized in that** one of the two running wheels (9) is forcibly guided during the pivoting of the running wheels (9, 10), while the other running wheel (10) acts as a following wheel moving through a limited angular range with respect to the first wheel.

11. The mower of claim 10, **characterized in that** when the mower is in its transport position, the front running wheel (9) acts as a guide wheel and the rear running wheel (10) acts as a following wheel.

## Revendications

1. Unité de fauchage, en particulier unité de fauchage à disques avec une barre d'attelage prévue pour l'attelage à une remorque, comportant un cadre qui porte des éléments de coupe et prend appui sur deux roues de roulement, la barre d'attelage (24) pouvant pivoter autour d un axe sensiblement vertical et être fixée par des moyens (30) mécaniques hydrauliques, pneumatiques et/ou électriques pour obtenir la position de travail ou la position de transport de l'unité de fauchage (6) par rapport au cadre (7), et les roues pouvant être pivotées autour d'axes sensiblement verticaux et être fixées par des moyens mécanique, hydrauliques, pneumatiques et/ou électriques, pour obtenir la position de travail et la position de transport par rapport au cadre, caractérisée en ce que pour obtenir la position de transport, à partir de la position de travail ou inversement, les roues (9, 10) peuvent pivoter d'un angle (37) supérieur à un angle limite dans le cas où la barre d'attelage est disposée rigidement sur le cadre de l'unité de fauchage, et en ce que l'angle de pivotement (37) des roues (9, 10) est supérieur à l'angle de pivotement (36) de la barre d'attelage (24).

2. Unité de fauchage selon la revendication 1, caractérisée en ce que pour le pivotement des roues (9, 10) et de la barre d'attelage (24) il est prévu un moyen (20, 30) commun.

3. Unité de fauchage selon la revendication 1, caractérisée en ce que pour le pivotement des roues (9, 10) et de la barre d'attelage (24), il est prévu des moyens (20 et 30) séparés.

4. Unité de fauchage selon l'une des revendications 1 à 3, caractérisée en ce que l'angle de pivotement (37) des roues (9, 10) est environ trois à quatre fois supérieur à l'angle de pivotement (36) de la barre d'attelage (24).

5. Unité de fauchage selon les revendications 2 ou 4, caractérisée en ce que des moyens de liaison (31, 32, 33) en vue de la transmission sont prévus pour le pivotement simultané et accordé des roues (9, 10) et de la barre d'attelage (24).

6. Unité de fauchage selon la revendication 5, caractérisée en ce qu'avec la barre d'attelage (24) est relié rigidement un levier (39) qui présente une articulation (24), qui est reliée articulée, par un bras oscillant (41), avec la plaque de butée (33), et en ce que la distance entre l'articulation (40) et le palier de pivotement (25), est suffisamment grande pour que les roues (9, 10) exécutent au moins 2,5 fois le mouvement de pivotement de la barre d'attelage (24).

7. Unité de fauchage selon la revendication 5, caractérisée en ce que la barre d'attelage (24) est prolongée au-delà d'un palier de pivotement (25) prévu sur le cadre (7) de l'unité de fauchage et l'extrémité libre (31) de la barre d'attelage (24) est reliée articulée avec une roue (9), par un levier (32), et en ce que les deux roues (9, 10) sont accouplées par une barre d'attelage (22).

8. Unité de fauchage salon la revendication 5, caractérisée en ce que la barre d attelage (24) est prolongée vers l'arrière au-delà d'un palier de pivotement (25), prévu sur le cadre (7), et l'extrémité libre (31) de la barre d'attelage (24) est reliée aux deux roues (9, 10), par un levier (32).

9. Unité de fauchage selon les revendications 6, 7 ou 8, caractérisée en ce que le moyen (20, 30) commun est placé entre la barre d'attelage (24) et le cadre (7) et comporte in vérin hydraulique (34) à double effet, qui peut être commandé à partir du siège du tracteur.

10. Unité de fauchage selon la revendication 1 ou 4, caractérisée en ce que lors du pivotement des deux roues (9, 10), l'une des deux roues (9) est guidée par force et l'autre roue (10) est conçue en tant que roue suiveuse, dans une plage angulaire limitée.

11. Unité de fauchage selon la revendication 10, caractérisée en ce que la roue avant (9) dans le sens du transport est conçue à la manière d'une roue de guidage et la roue arrière (10) en tant que roue suiveuse.
